# FASCICULE DE BREVET EUROPEEN

(11) **EP 0 792 729 B1**
(45) Date de publication et mention de la délivrance du brevet: **18.11.1998**
(21) Numéro de dépôt: 97420029.7
(22) Date de dépôt: 26.02.1997
(51) Int. Cl.: B28C 5/18, F16P 1/02, B01F 13/04

(54) **Carter de protection du pignon d'entraînement d'une bétonnière**
Schutzhaube für den Antriebsritzel eines Betonmischers
Protective cover for the drive pinion of a concrete mixer

(30) Priorité: 29.02.1996 FR 9602793
(43) Date de publication de la demande: 03.09.1997
(73) Titulaire: ETABLISSEMENTS GUY NOEL, F-01500 Amberieu en Bugey (FR)
(72) Inventeur: Noel, Guy, 01320 Chatillon la Palud (FR)
(74) Mandataire: Monnier, Guy

(56) Documents cités:
- EP-A- 0 369 350
- DE-C- 4 115 511
- DE-U- 9 105 877
- DE-U- 9 105 878
- GB-A- 2 223 182
- US-A- 4 148 589

## Description

La présente invention a trait à un carter de protection destiné à protéger l'accès au pignon d'entraînement et à la couronne dentée fixée sur le pourtour de la cuve d'une bétonnière (voir p.ex. le document US-A-4,148,589).

Ce carter est prévu comme un moyen de sécurité au niveau de l'engrènement du pignon avec la couronne dentée.

On connaît des carters de ce genre qui sont fixés sur toute la périphérie extérieure de la couronne dentée de la bétonnière.

Ces carters coûtent très cher à la fabrication, augmentant nécessairement le prix de revient d'une bétonnière.

Il est généralement prévu autour du pignon d'entraînement un boîtier de protection ouvert de forme rectangulaire ou carrée, comportant une échancrure pour le passage de la couronne dentée. Au niveau de cette échancrure, le carter présente un angle rentrant qui est un danger pour les doigts ou la main d'un individu.

En effet, si un doigt est introduit dans le creux entre deux dents de la couronne, il sera entraîné jusqu'au niveau du pignon d'entraînement, ce qui présente un danger considérable pour l'individu.

En outre, si l'individu présente les doigts le long de la couronne dentée, l'extrémité des doigts peut venir en contact avec le pignon d'entraînement et être happée et découpée.

C'est à ces inconvénients qu'entend plus particulièrement remédier la présente invnetion.

La présente invention consiste à ajouter au boîtier du pignon d'entraînement un carter de protection dit "protège-doigts" qui se termine suivant un profil particulier pour protéger les doigts de la façon suivante :
- Si le doigt est introduit dans le creux entre deux dents de la couronne, il est éjecté vers l'extérieur par le profil du carter,
- Si le doigt se présente le long de la couronne dentée, la longueur du carter dit "protège-doigts" évite que l'extrémité du doigt soit en contact avec le boîtier recevant le pignon denté.

Le carter de protection destiné à protéger l'accès au pignon d'entraînement et à la couronne dentée d'une bétonnière comprend un profil en L s'étendant le long de la couronne dentée et dont l'une des extrémités est solidaire du boîtier de protection du pignon d'entraînement, tandis que l'extrémité opposée présente une pente d'éjection.

Selon la présente invention, le carter de protection présente une longueur suffisante pour protéger les doigts d'un individu lorsque ces derniers se présentent le long de la couronne dentée.

En outre, la pente d'éjection prévue à l'extrémité libre du carter de protection est destinée au retrait d'un doigt introduit dans un creux entre deux dents de la couronne.

Selon un cas particulier de l'invention, le carter de protection comprend un profil en L s'étendant le long de la couronne dentée dont la partie verticale du L se prolonge par une aile qui présente une pente dont la partie inférieure est voisine de la partie horizontale du L.

Le dessin annexé, donné à titre d'exemple, permettra de mieux comprendre l'invention, les caractéristiques qu'elle présente et les avantages qu'elle est susceptible de procurer:
- Figure 1 est une vue en perspective illustrant le carter de protection suivant la présente invention.
- Figure 2 est une vue de face montrant la mise en place du carter de protection sur une bétonnière;
- Figure 3 est une vue de dessus représentant la mise en place du carter de protection le long de la couronne dentée de la bétonnière.

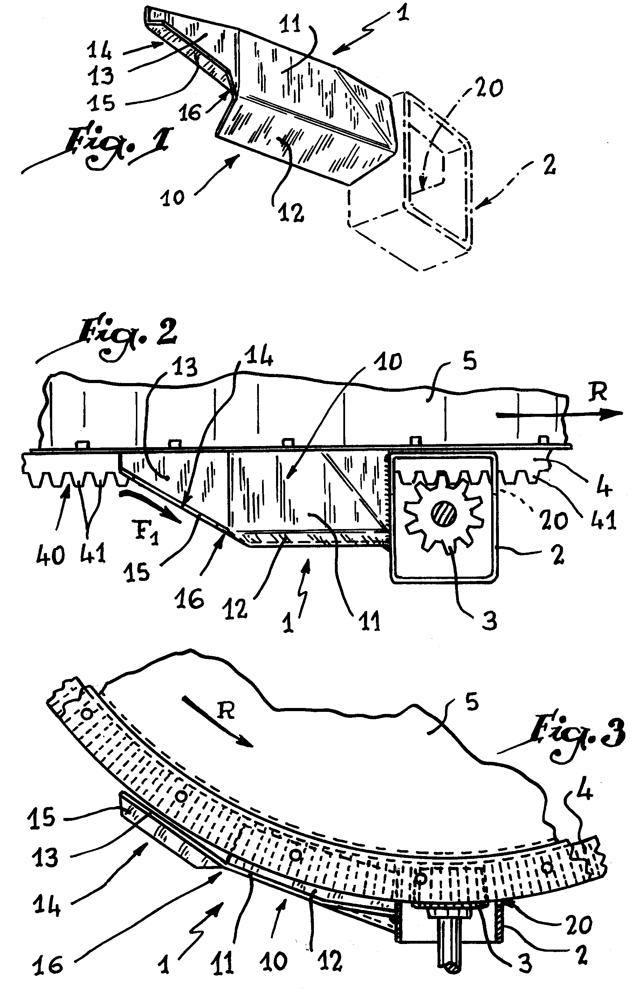

On a représenté en figures 1 à 3 un carter de protection 1 qui est solidaire d'un boîtier 2, connu en soi, protégeant un pignon 3 qui engrène avec une couronne dentée 4 fixée sur le pourtour extérieur de la cuve 5 d'une bétonnière.

Le boîtier 2 présente une découpe 20 en L pour le passage de la couronne dentée 4 lors de sa fixation sur la bétonnière.

Le carter de protection 1 est soudé sur le boîtier 2 au niveau de la découpe 20. Le carter de protection 1 comprend un profil 10 en L qui s'étend le long de la couronne dentée 4.

Le profil 10 en L comporte une partie verticale 11 disposée à proximité de la couronne dentée 4 et une partie sensiblement horizontale 12 qui s'étend en dessous de ladite couronne.

La partie verticale 11 du profil 10 se prolonge le long de la couronne dentée 4 par une aile 13 qui est découpée pour former une pente 14.

Cette dernière est constituée par un bord retourné 15 de l'aile 13 qui s'étend à l'extérieur du carter de protection 1.

La pente 14 est inclinée vers la droite suivant le sens de rotation R de la cuve 5 pour présenter une partie inférieure 16 qui est voisine de la partie sensiblement horizontale 12 du profil 10 en L.

Lors de la fixation du carter de protection 1 sur la bétonnière, on remarque que ce dernier s'étend à l'opposé du sens de rotation R de la cuve 5.

Le carter de protection 1 permet de protéger les doigts d'un individu de la manière suivante :
- Si un doigt est introduit par inadvertance dans le creux 40 délimité par deux dents 41 de la couronne 4, ce dernier est repoussé vers l'extérieur du carter 1 dès qu'il vient en contact avec la pente 14 de l'aile 13, comme montré par la flèche F1 de figure 2.
- Si un ou plusieurs doigts se présentent le long de la couronne dentée 4, la longueur du profil 10 en L et plus particulièrement de sa partie sensiblement horizontale 12 est suffisante pour que l'extrémité du ou des doigts ne vienne pas en contact avec le boîtier 2 protégeant le pignon d'entraînement 3.

## Revendications

1. Carter de protection (1) d'un pignon d'entraînement et d'une couronne dentée (4) permettant la mise en rotation de la cuve d'une bétonnière, caractérisé en ce qu'il comprend un profil (10) en L s'étendant le long de la couronne dentée (4) et dont l'une des extrémités est solidaire d'un boîtier de protection (2), connu en soi, du pignon d'entraînement (3), tandis que l'extrémité opposée présente une pente d'éjection (14).

2. Carter de protection suivant la revendication 1, caractérisé en ce que le profil (10) en L s'étendant le long de la couronne dentée (4) présente une partie verticale (11) qui se prolonge par une aile (13) pourvue d'une pente (14) dont la partie inférieure (16) est voisine de la partie sensiblement horizontale (12) du profil (10) en L.

3. Carter de protection suivant la revendication 1, caractérisé en ce que la pente d'éjection (14) est constituée par un bord retourné (15) de l'aile (13) dirigé à l'extérieur du carter de protection (1).

4. Carter de protection suivant la revendication 1, caractérisé en ce que la partie verticale (11) du profil (10) en L est disposée à proximité de la couronne dentée (3), tandis que la partie sensiblement horizontale (12) s'étend en dessous de ladite couronne.

5. Carter de protection suivant la revendication 1, caractérisé en ce que le profil (10) en L et plus particulièrement sa partie sensiblement horizontale (12) présente une longueur suffisante pour protéger les doigts d'un individu lorsque ces derniers sont introduits le long de la couronne dentée (4).

6. Bétonnière du genre comprenant une cuve (5) qui est entraînée en rotation par l'intermédiaire d'un pignon (3) et d'une couronne dentée (4), caractérisée en ce qu'elle comprend un carter de protection (1) comportant un profil (10) en L s'étendant le long de la couronne dentée (4) et dont l'une des extrémités est solidaire d'un boîtier de protection (2), connu en soi, du pignon d'entraînement (3), tandis que l'extrémité opposée présente une pente d'éjection (14).

7. Bétonnière suivant la revendication 6, caractérisée en ce que le profil (10) s'étendant le long de la couronne dentée (4) présente une partie verticale (11) qui se prolonge par une aile (13) pourvue d'une pente (14) dont la partie inférieure (16) est voisine de la partie sensiblement horizontale (12) du profil (10) en L.

## Claims

1. Cover (1) for protecting a drive pinion and an annulus gear (4) for rotating the drum of a concrete mixer, characterized in that it has an L-shaped profile (10) extending along the annulus gear (4) and one of the ends of which is secured to a protective casing (2), known per se, of the drive pinion (3), while the opposite end has an expelling slope (14).

2. Protective cover according to Claim 1, characterized in that the L-shaped profile (10) extending along the annulus gear (4) has a vertical part (11) which extends in the form of a wing (13) which has a slope (14), the lower part (16) of which is close to the approximately horizontal part (12) of the L-shaped profile (10).

3. Protective cover according to Claim 1, characterized in that the expelling slope (14) consists of a turned back edge (15) of the wing (13) facing out from the protective cover (1).

4. Protective cover according to Claim 1, characterized in that the vertical part (11) of the L-shaped profile (10) is situated close to the annulus gear (4), while the approximately horizontal part (12) extends underneath the said gear.

5. Protective cover according to Claim 1, characterized in that the L-shaped profile (10), and more specifically its approximately horizontal part (12), is long enough to protect the fingers of an individual when these fingers are inserted along the annulus gear (4).

6. Concrete mixer of the kind comprising a drum (5) which is rotated by a pinion (3) and an annulus gear (4), characterized in that it comprises a protective cover (1) comprising an L-shaped profile (10) extending along the annulus gear (4), and one of the ends of which is secured to a protective casing (2), known per se, of the drive pinion (3), while the opposite end has an expelling slope (14).

7. Concrete mixer according to Claim 6, characterized in that the profile (10) extending along the annulus gear (4) has a vertical part (11) which extends in the form of a wing (13) which has a slope (14), the lower part (16) of which is close to the approximately horizontal part (12) of the L-shaped profile (10).

## Patentansprüche

1. Schutzhaube (1) für ein Antriebsritzel und einen Zahnkranz (4) zum Drehantrieb der Trommel eines Betonmischers,
dadurch gekennzeichnet,
daß die Schutzhaube ein L-Profil umfaßt, das sich entlang des Zahnkranzes (4) erstreckt und dessen eines Ende an einem Schutzgehäuse (2) des an sich bekannten Antriebsritzels (3) befestigt ist, wohingegen das andere Ende eine Abweisschräge (14) bereitstellt.

2. Schutzgehäuse nach Anspruch 1,
dadurch gekennzeichnet, daß das sich entlang der Zahnstange (4) erstreckende L-Profil (10) einen vertikalen Abschnitt (11) aufweist, der über einen Flügel (13) verlängert ist, der mit einer Schräge (14) versehen ist, deren unterer Abschnitt (16) zu dem in etwa horizontalen Abschnitt (12) des L-Profils (10) benachbart ist.

3. Schutzgehäuse nach Anspruch 1,
dadurch gekennzeichnet, daß die Auswerfschräge (14) durch einen nach außerhalb der Schutzhaube (1) gerichteten, umgebogenen Rand (15) des Flügels (13) gebildet wird.

4. Schutzhaube nach Anspruch 1,
dadurch gekennzeichnet, daß der vertikale Abschnitt (11) des L-Profils (10) nahe bei des Zahnkranzes (3) angeordnet ist, während sich der in etwa horizontale Abschnitt (12) unter den Zahnkranz erstreckt.

5. Schutzhaube nach Anspruch 1,
dadurch gekennzeichnet, daß das L-Profil (10) und insbesondere dessen in etwa horizontaler Abschnitt (12) eine ausreichende Länge aufweist, um die Finger eines Individuums zu schützen, wenn die Finger entlang des Zahnkranzes ausgestreckt werden.

6. Betonmischer mit einer Trommel (5), die über ein Antriebsritzel (3) und einen Zahnkranz (4) gedreht wird, dadurch gekennzeichnet,
daß der Betonmischer eine Schutzhaube (1) umfaßt, welche sich entlang des Zahnkranzes (4) erstreckt und dessen eines Ende an einem Schutzgehäuse (2) des an sich bekannten Antriebsritzels (3) befestigt ist, wohingegen das andere Ende eine Abweisschräge (14) bereitstellt.

7. Betonmischer nach Anspruch 6,
dadurch gekennzeichnet, daß das sich entlang der Zahnstange (4) erstreckende L-Profil (10) einen vertikalen Abschnitt (11) aufweist, der über einen Flügel (13) verlängert ist, der mit einer Schräge (14) versehen ist, deren unterer Abschnitt (16) zu dem in etwa horizontalen Abschnitt (12) des L-Profils (10) benachbart ist.
